# EUROPEAN PATENT APPLICATION

(11) **EP 1 058 364 A1**
(43) Date of publication of application: **06.12.2000**
(21) Application number: 00112016.1
(22) Date of filing: 02.06.2000
(51) Int. Cl.: H02G 15/08, H02G 15/113

(54) **Connector weather-proofing apparatus**

(30) Priority: 01.06.1999 US 136974 P
(71) Applicant: ANDREW A.G., CH-8184 Bachenbulach (CH)
(72) Inventor: Paske, Jamie M., Oak Lawn, IL 60453 (US); Wieck, Thimothy J., Villa Hills, KY 41017 (US)
(74) Representative: Grünecker, Kinkeldey, Stockmair & Schwanhäusser Anwaltssozietät

(57) **Abstract**

The present invention relates to an apparatus (20) for weather-proofing a connection between two cables (78,80). The apparatus (20) includes a housing (34) enclosing the connection. The housing (34) has end apertures (26,30) through which the cables (78,80) extend, and an elastically deformable end seal (88) is placed between each aperture and one of the cables. The sections of the housing (34) are hingedly connected by an interlocking mechanism (36) formed along one edge of each housing (34). The sections also include engageable snap tabs (60) formed along an edge opposite the hinge (36). The housing (34) may be constructed of identical, molded housing halves (32,34).

## Description

### FIELD OF THE INVENTION

The present invention is directed generally to an apparatus for weather-proofing structures or devices, such as electrical components, and is disclosed more particularly with reference to the employment of a novel and improved apparatus for weather-proofing connections between coaxial cables.

### BACKGROUND OF THE INVENTION

Connections between electrical cables, such as coaxial cables, may employ weather-proofing methods or apparatus, particularly where the cables and associated connectors are intended for exterior or out-of-doors use. A number of considerations apply in obtaining effective weather-proofing of such connections. For example, it is desirable to prevent moisture or other environmental elements from entering the connection and possibly degrading the electrical characteristics of the connection, such as the contact resistance. This may occur as a result of corrosion of the connectors, deposit of other materials upon the contact surfaces of the connectors, or other physical or chemical processes which occur as a result of the influence of moisture or other environmental factors, contaminants, or other foreign materials upon the connectors.

As a related matter, it is also desirable to minimize condensation about the connector. That is, even though environmental moisture is excluded, changes in temperature and humidity may cause condensation to form about the connector.

Third, some means of maintaining proper connector torque or desired connection forces between the elements of a connector, while in use in the field, is desirable. Maintaining the desired forces of engagement between connector parts helps to maintain desired electrical characteristics of the connector, such as contact resistance and the like. Various forces, such as wind loading or shaking, may occur in out-of-doors cables and associated connections which give rise to vibrations which tend to loosen the connections.

Various methods of wrapping and sealing such coaxial connections have been utilized. In one method, a quantity of pliable butyl rubber is applied about the connection, usually in the form of a sticky, tape-like material which is wrapped around the connection. This butyl tape tends to be sensitive to temperature variations, becoming soft and sticky in hot temperatures and relatively rigid and nonpliable in cold temperatures. These characteristics can impede installation and/or removal in extreme temperature conditions. For example, in relatively hot temperatures, the butyl material can transfer onto the hands and equipment of the installer, further impeding installation and/or removal. In cold weather, the tape is difficult to wrap so as to closely conform to the connection as it becomes rigid and unpliable. Thus, the proper application of sealing methods using such butyl rubber tape to coaxial connectors may be impeded by the characteristics of the butyl material, resulting in either incomplete or improperly sealed connections, the creation of voids or bubbles in which moisture can condensate, relative difficulty during either installation or removal in extreme temperatures, and befouling of equipment or of the hands of the installer.

A second method sometimes utilized is the provision of a cold shrink product which is stretched onto a corrugated tube and transferred from the tube onto a cable to overlie the connectors and area of connection therein. The corrugated tube is a relatively elongated member and must be removed and discarded following application of the shrink product. This can cause some difficulty in handling the elongated tube and placing it over the cable and transferring the stretched material over the connection and in proper alignment with the connection. This also results in some amount of excess material, clutter, and the like. These factors can be particularly inconvenient when working on overhead wires from a tower or other elevated support structure in which space is generally limited. Also, packaging, shipping, and storage of quantities of such elongated tubular corrugated carriers with associated cold shrink product thereon can be inconvenient.

### SUMMARY OF THE INVENTION

One embodiment of the present invention is directed to an apparatus for weather-proofing a connection between two cables. The apparatus comprises a housing and an elastically deformable end seal. The housing encloses the connector and has an aperture through which the cables extend. The end seal is between the aperture of the housing and the cables.

A second embodiment of the present invention is directed to a housing for a weather-proofing apparatus comprising a first section and a second section. A pocket extends from an edge of the first section and a lobe is adjacent to the pocket of the first section. A pocket also extends from an edge of the second section and a lobe is adjacent to the pocket of the second section. The lobe of the first section engages the pocket of the second section and the lobe of the second section engages the pocket of the first section to hingedly connect the first section to the second section.

Another embodiment of the present invention is directed to a housing for a weather-proofing apparatus comprising a first section and a second section. A first edge of the first section is hingedly connected to a first edge of the second section. A first ledge extends from a second edge of the first section, and a second ledge extends from a second edge of the second section. A first snap tab projects laterally from the first ledge, and a second snap tab projects laterally from the second ledge. Each snap tab comprises a U-shaped projection and a wedge-like clasp. The projection has a first wall extending from the ledge and a second resiliently deformable wall. The clasp extends from the second wall. The first snap tab is engageable with the second snap tab to connect the second edge of the first section with the second edge of the second section.

In one practical and advantageous embodiment, the housing is constructed of molded housing halves which are substantially identical. The housing halves employ interfitting "male" and "female" hinge parts and clasp parts which are formed symmetrically about a given centerline, to permit the use of a single mold to produce both housing halves. In one embodiment, a central plane of symmetry is defined in a plane perpendicular to a longitudinal axis of the (assembled) housing halves, that is, an axis essentially coincident with the axis of a pair of connected cables which have a connection protected by an assembled weatherproofing apparatus which includes the assembled housing halves. In one embodiment, various details of the molded housing halves are further designed so as to reduce or minimize mold complexity and thereby reduce the cost of both the mold and the molding process. In addition, the requirement of but a single mold to produce both housing halves reduces mold and process costs.

The present invention produces a number of advantages and/or benefits over conventional weather-proofing apparatus. For example, the weather-proofing apparatus of the present invention:
- displaces air, thus minimizing the pockets around the connector or device and reducing the potential for condensation prior to sealing;
- dampens vibration resulting from wind loading or shaking forces to maintain the recommended connector torque;
- seals out environmental elements, such as, but not limited to, dust, rain, and snow, thereby maintaining the integrity of the transmission line electrical performance;
- accommodates various cable diameter transitions and various contours of devices;
- reduces fungus and mildew growth caused by condensation;
- allows for easy and repeatable assembly with minimal instructions;
- seals irregular surfaces, such as corrugated coaxial cables and/or cables of varying diameters;
- results in a clean connector or device upon re-entry or removal of the weather-proofing system;
- is insensitive to installation temperatures;
- is insensitive to removal temperatures;
- is safer to install and remove because no materials transfer onto the hands;
- withstands immersion in one meter of water for 24 hours;
- reduces installation time;
- requires fewer or no materials to discard after installation; and
- requires no installation tools.

### BRIEF DESCRIPTION OF THE DRAWINGS

The following drawings form part of the present specification and are included to further demonstrate certain aspects of the present invention. The invention may be better understood by reference to one or more of these drawings in combination with the detailed description of specific embodiments presented herein.
FIG. 1 is a perspective view of a weather-proofing apparatus with an open housing and a connector therein, in accordance with one embodiment of the present invention;
FIG. 2 is a top view of the weather-proofing apparatus of FIG. 1;
FIG. 3 is a front view of the weather-proofing apparatus of FIG. 1 with a closed housing;
FIG. 4 is a front view of a partially assembled housing, in accordance with one embodiment of the present invention;
FIG. 5 is a bottom plan view of one of the halves or sections of the housing of FIG. 4;
FIG. 6 is a bottom plan view of the housing section of FIG. 5 with a side elevation of the second housing half or section, showing an initial step in the assembly thereof;
FIG. 7 is an enlarged partial view of one of the pockets and its corresponding lobe of FIG. 6 being brought into alignment with a corresponding pocket and lobe of the other housing half;
FIG. 8 is an enlarged partial view of the pockets and lobes similar to FIG. 7, and showing the pockets and lobes aligned;
FIG. 9 is an enlarged partial view of the pockets and lobes similar to FIG. 7, showing the pockets and lobes interlocked;
FIG. 10 is a perspective view of an open housing, in accordance with one embodiment of the present invention;
FIG. 11 is a side view of one of the halves or sections of the housing of FIG. 10 showing the snap tabs;
FIG. 12 is an enlarged partial side view showing the snap tabs of both housing halves aligned;
FIG. 13 is a side view similar to FIG. 12 with the snap tabs advanced for engagement;
FIG. 14 is a side view of the snap tabs of FIG. 12 with the snap tabs locked together;
FIG. 15 is an elevation of a closed cell rubber foam cast, in accordance with one embodiment of the present invention;
FIG. 16 is an end view of a closed cell rubber foam cast of FIG. 15;
FIG. 17 is an enlarged cross-sectional partial view of an end seal against a cable, in accordance with one embodiment of the present invention;
FIG. 18 is an enlarged cross-sectional partial view of the end seal of FIG. 17 pressed against the cable;
FIG. 19 is an enlarged cross-sectional view of a perimeter seal in a groove on the edge of the housing, in accordance with one embodiment of the present invention;
FIG. 20 is an enlarged cross-sectional view of the perimeter seal of FIG. 19 pressed into the groove;
FIG. 21 is a front view of a C-shaped half or segment of an end seal, in accordance with one embodiment of the present invention;
FIG. 22 is a top view of an assembled weather-proofing apparatus with an open housing, with cable connectors and cables, in accordance with one embodiment of the present invention;
FIG. 23 is an end view of the weather-proofing apparatus of FIG. 22 with a partially closed housing;
FIG. 24 is an opposite end view of the weather-proofing apparatus of FIG. 23 with the housing nearly closed;
FIG. 25 is an exploded front view of an area A of FIG. 24, showing the displacement of end seal material of FIG. 24; and

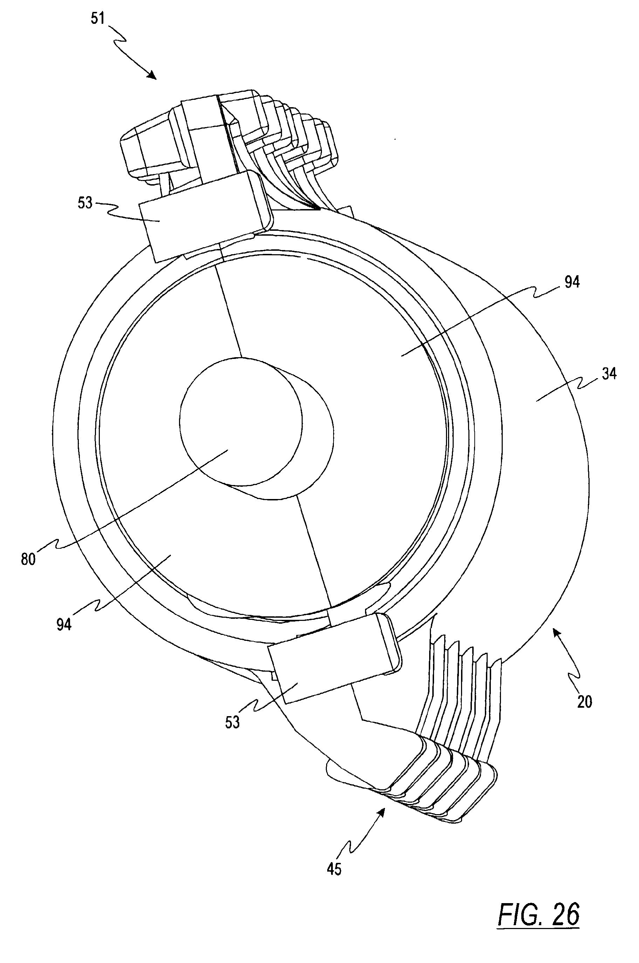

FIG. 26 is a perspective end view of the weather-proofing apparatus of FIG. 22 in the closed position.

### DESCRIPTION OF ILLUSTRATIVE EMBODIMENTS

The following examples are included to demonstrate illustrative embodiments of the invention. It should be appreciated by those of skill in the art that the construction and techniques disclosed in the examples which follow represent construction and techniques discovered by the inventors to function well in the practice of the invention. Those of skill in the art should, however, in view of the present disclosure, appreciate that many changes can be made in the specific embodiments which are disclosed and still obtain a like or similar result without departing from the spirit and scope of the invention. For example, an embodiment of an apparatus for weather-proofing is shown in connection with a coaxial connector for interconnecting lengths or sections of coaxial cable; however, the connections may be between various other types of cables or wires, including individual wires or multiples wires, by various types of connectors or splice connections. The invention may also be useful for other weather-proofing devices and structures, including, but not limited to, electrical equipment.

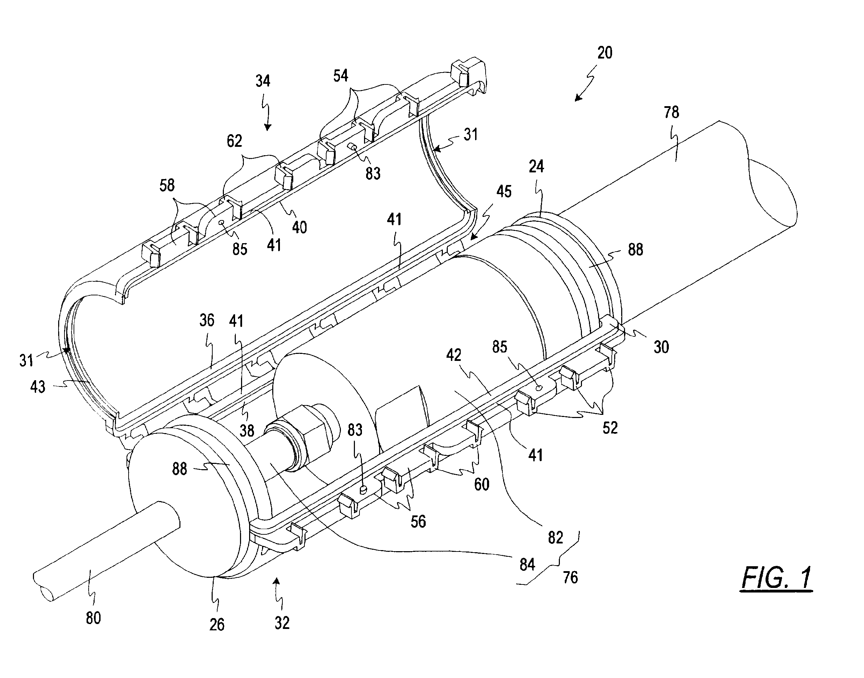

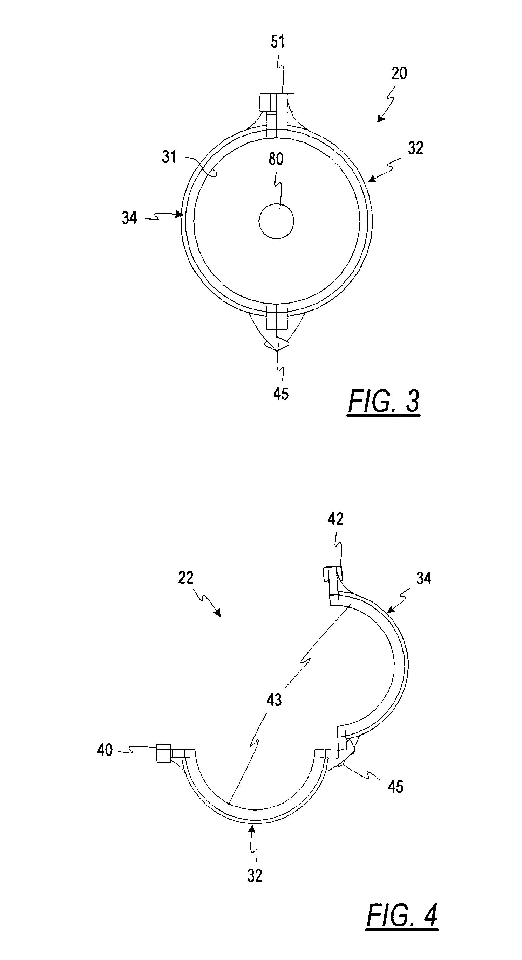

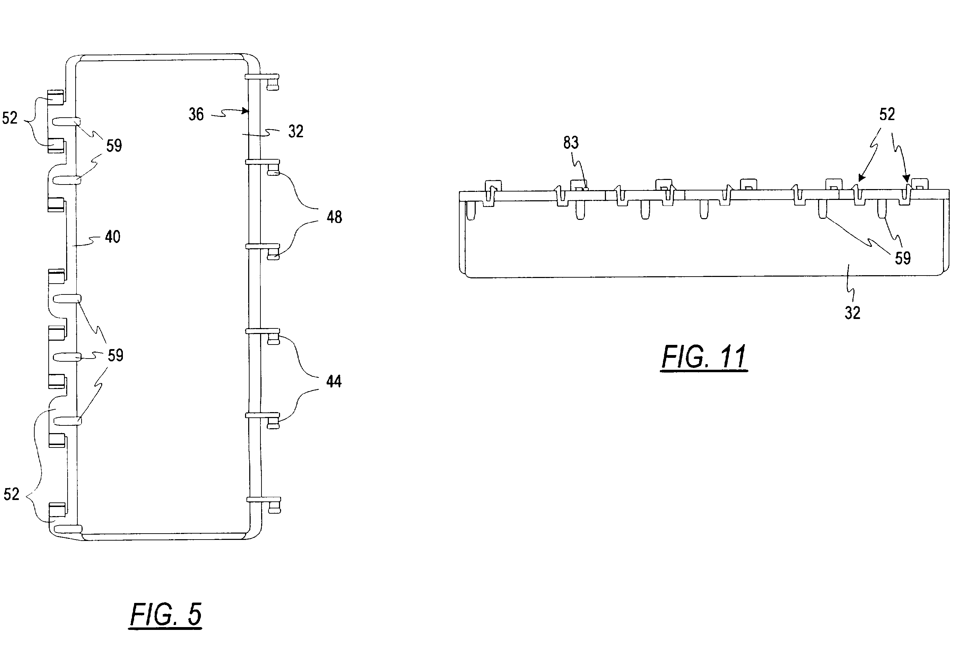

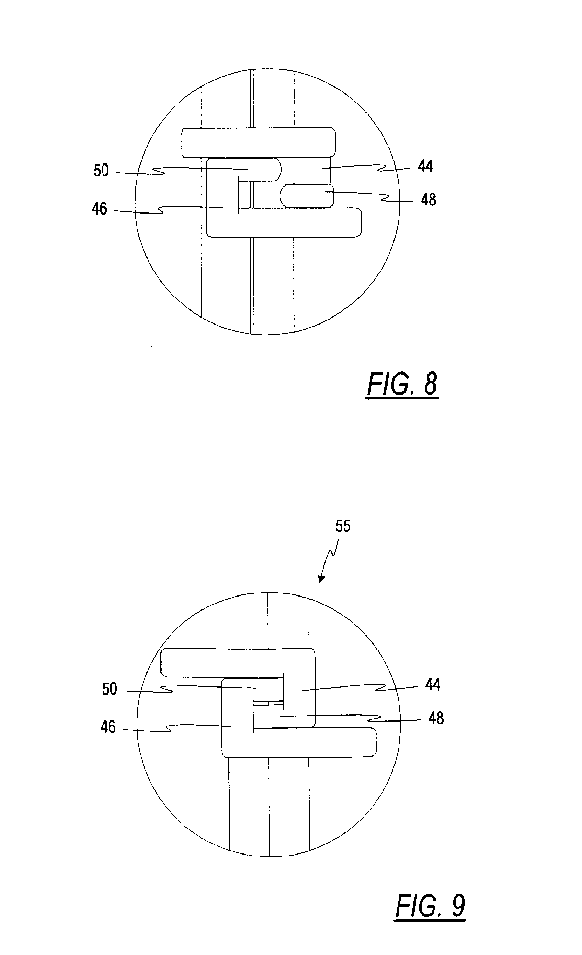

A weather-proofing apparatus 20 in accordance with the present invention is shown in FIGS. 1-3. The weather-proofing apparatus 20 includes a housing 22, end seals 24, 26, and perimeter seals 28, 30. In the illustrated embodiment, the housing 22 has two apertures 31 and comprises two identical halves or sections 32, 34. Further details of the housing 22 and its halves or sections 32, 34 are shown in FIGS. 4-14. Each section 32, 34 has a first edge 36, 38 and a second edge 40, 42. A groove 41 extends along each edge 36, 38, 40, 42 of the housing 22. A lip 43 extends along the circumference of the aperture 31 of the housing 22. An integral hinge 45 is defined by a plurality of complimentary, interfitting pockets 44, 46 and lobes 48, 50. The pockets 44, 46 extend from the first edge 36, 38 of each section 32, 34, and a lobe 48, 50 is formed adjacent to each pocket 44, 46. The lobes from each edge 36, 38 engage the pockets from the other edge 36, 38 to form a hinge. The lobes 48, 50 are generally circular, disc-like bodies having rounded outer edges and are located adjacent respective pockets 44, 46. The lobes 48, 50 are concentric when advanced to the position shown in FIG. 9, to define a true pivot.

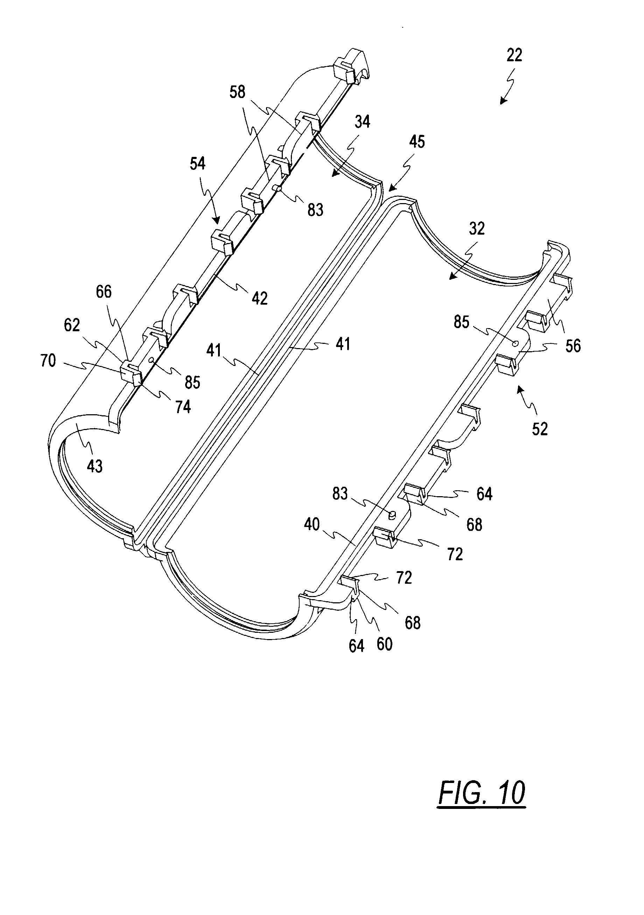

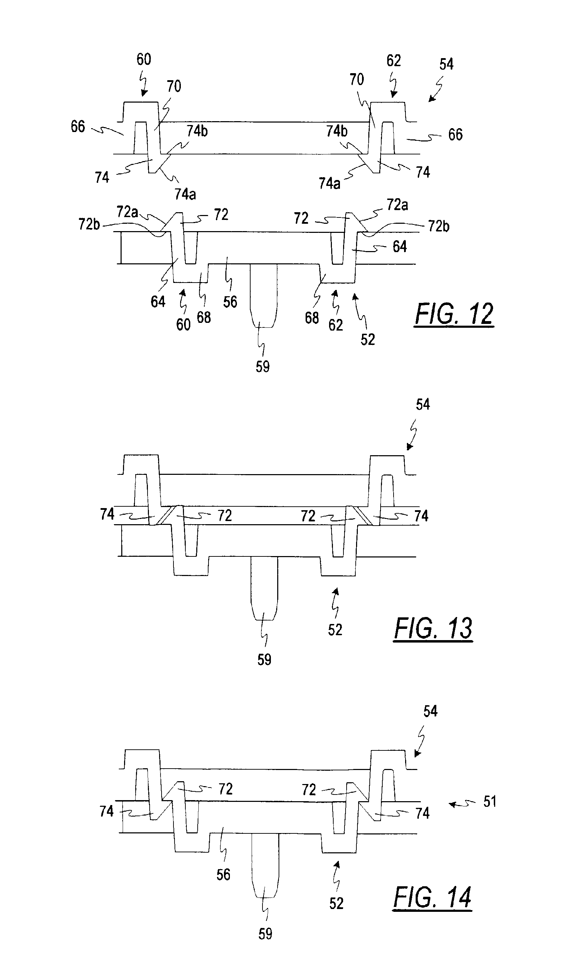

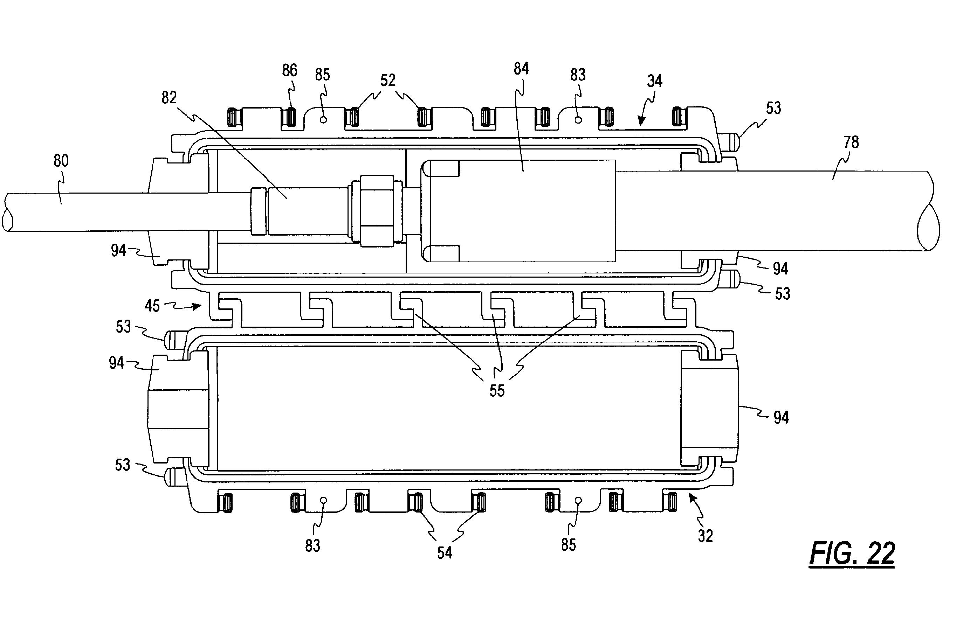

An integral closure 51 is defined by a series of snap tabs 52, 54 which project laterally from a plurality of ledges 56, 58 which, in turn, extend from the second edges 40, 42 of the sections 32, 34. Supports or ribs 59 are provided to reinforce the ledges 56, 58. End snap tabs 53 may also extend from the ends of the edges 36, 38, 40, 42 of the sections 32, 34, as shown, for example, in FIG. 22. FIGS. 12-14 illustrate exploded views of the snap tabs 52, 54. Each of the snap tabs 52, 54 comprises a U-shaped projection 60, 62 with a first wall 64, 66 and a second wall 68, 70 which supports a wedge-like clasp 72, 74. One wall 64, 66 of the projection 60, 62 extends from the ledge 56, 58, and the other wall 68, 70 extends freely and is resiliently deformable. The clasp 72, 74 extends from the second or free wall 68, 70 of the projection 60, 62, as shown in FIG. 10. Each clasp 72, 74 has a sloping edge or "ramp" 72a, 74a and a trailing edge 72b, 74b. The clasps 72, 74 releasably interlock as the two halves are hingedly closed, as indicated sequentially in FIGS. 12, 13 and 14.

The housing 22 comprises a "weather-able" plastic that has been impact modified. The housing 22 should have good chemical resistance as well as thermal stability, and the material used for the housing 22 should minimize the UV weathering impact. An example of a suitable material is a polycarbonate and polyethylene terephthalate alloy, such as Makroblend® UT 403 by Bayer Corporation. Other materials, such as a fiber reinforced plastic, may also be used, such as a Makroblend® UT 640G by Bayer Corporation.

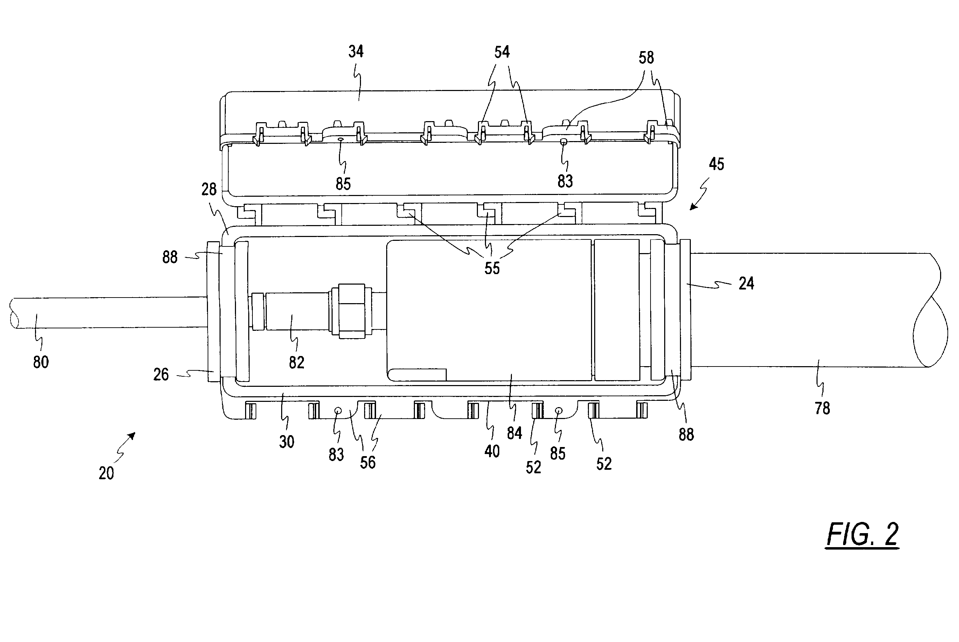

The housing 22 encloses a structure, shown as a connector 76 in FIGS. 1 and 2, between a relatively large diameter coaxial cable 78 and a relatively small diameter coaxial cable 80. This connector 76 comprises a first connector part 82 of a relatively larger diameter for accommodating the large diameter cable 78, and a second cooperatively interfitting connector part 84 which is of a smaller diameter for accommodating the small diameter cable 80. Although the connector 76 is shown between two cables 78, 80 of different diameters, the present invention is equally applicable to weather-proofing and sealing connections between like-size cables employing like-size connector elements.

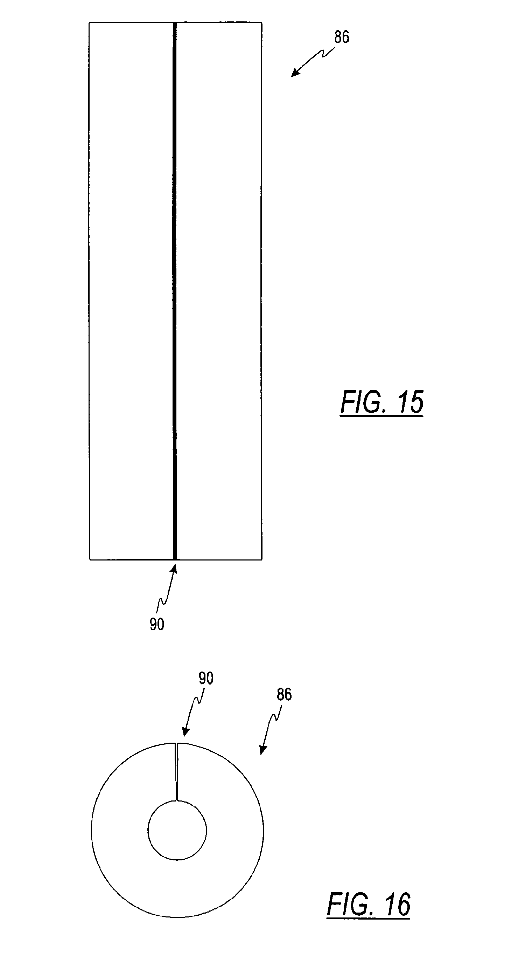

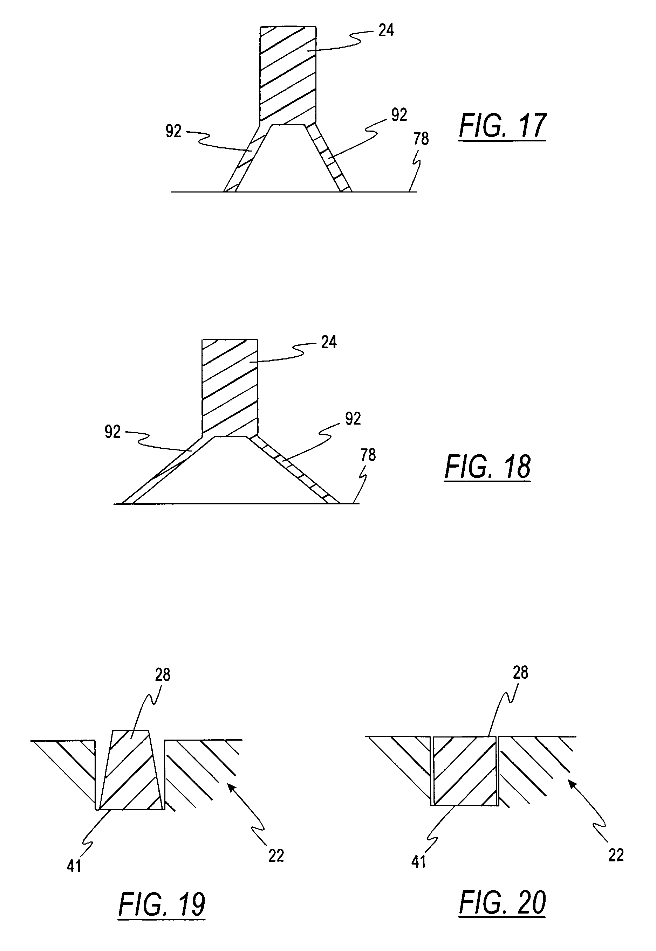

An air displacing/vibration dampening member 86, shown in FIGS. 15 and 16, comprising a closed cell foam cast fits around the connector 76 within the housing 22. Although the foam cast 86 is shown as a single tube having a slit 90 which slides over the connectors 82, 84, the foam cast may be inserted in various forms. For example, the foam cast 86 may take the form of two essentially symmetrical halves which may be interfitted about the external surface of the connectors 82, 84.

The closed cell foam cast 86 acts as a barrier to prevent moisture absorption, e.g., if the connector 76 is installed in the rain. By eliminating the potential for condensation build-up, the foam cast 86 also prohibits the growth of fungus or mildew. The foam cast 86 also contributes to the dampening of vibrations, thereby helping to maintain the recommended torque or connection forces between the connectors 82, 84. A relatively soft, closed cell foam may be used for this purpose so as to closely conform to the external surfaces of the connectors 82, 84 and eliminate air pockets. The soft foam cast 86 is easily compressed onto the connector 76 to fill the transition area without excessive push back on the housing 22, and to also aid in aligning the housing 22 over the connection 76. An example of a suitable material for the foam cast 86 is a styrene-butadiene rubber (SBR) molded sponge extruded by Kirkhill Rubber of Brea, California.

The end seals 24, 26 are placed between the cables 78, 80 and the housing 22 to seal the space between the cables 78, 80 and the housing 22. As shown in FIG. 2, a circumferential groove 88 around an outer surface of each end seal 24, 26 helps to align the end seal 24, 26 with the lip 43 along the aperture 31 of the housing 22. One embodiment of the end seals 24, 26 is in the form of a generally annular grommet. The perimeter seals 28, 30 are placed in the grooves 41 along the edges 36, 38, 40, 42 of the housing 22 to seal the space between the two housing sections 32, 34. The seals 24, 26, 28, 30 are elastic and, preferably, comprise a gel, butyl silicone, urethane, or thermoplastic elastomer.

In one embodiment, the end seals 24, 26 and perimeter seals 28, 30 comprise a low durometer elastically deformable material. Preferably, the material has a durometer less than 64±5 measured on the Shore A scale. More preferably, the material has a durometer less about than 55±5 measured on the Shore A scale and, even more preferably, the material has a durometer less than 35±5 measured on the Shore A scale. Examples of suitable materials for the end seal 24, 36 and the perimeter seal 28, 30 are Santoprene 101-55 or Santoprene 101-35, Thermoplastic Elastomers, from Advanced Elastomer Systems.

FIG. 17 illustrates a radial lip/seal profile of another form of the end seal 24, 26. When the end seals 24, 26 are pressed against the cables 78, 80, the lips 92 on the end seal 24, 26 spread to produce a partial vacuum against the cable 78, 80 and allow the housing 22 to close, as shown in FIG. 18.

FIG. 19 illustrates one form of the low durometer perimeter seal 28, 30 placed into the groove 41 of the housing 22. As shown, the cross-section of the perimeter seal 28, 30 in the groove 41 is trapezoidal. The pressure from sealing the housing 22 onto the low durometer perimeter seals 28, 30 forces the perimeter seals 28, 30 to conform to the shape of the groove 41, as illustrated in FIG. 20.

Alternatively, the end seals 24, 26 and perimeter seals 28, 30 may comprise a very low durometer elastically deformable material. Preferably, the material has a durometer less than 20±5 measured on the Shore A scale. More preferably, the material has a durometer less than 10±5 measured on the Shore A scale. The very low durometer enables the end seal material to flow around the cables 78, 80 with minimal compressive forces exerted from closing the housing 22. Also, this perimeter seal material does not jeopardize the seal integrity nor place high stresses on the snap tabs 52, 54 or hinge 45. Due to the flow characteristics, as well as the very low durometer of the sealing compound, the end seals 24, 26 and perimeter seals 28, 30 are able to compensate for scratches or imperfections in the housing 22 or cable 78, 80 by flowing in and around the imperfections, filling any void. The very low durometer seals 24, 26, 28, 30 also deform to compensate for any axial misalignment of the two cables 78, 80. Suitable seal material for the very low durometer seals 24, 26, 28, 30 are Adiprene® and Vibrathane® produced by Uniroyal Chemical Company, Inc.

The ledges 56, 58 of the housing halves may include pairs of mating bosses 83 and counterbores 85 (see FIGS. 1, 2, 10, 11 and 22) which interengage when the housing is hingedly closed. These interengaged bosses and counterbores help secure the closed housing against radial movement, to thereby retain the sealing effected by the perimeter seals 28, 30 and the end seals 24, 26.

Although the very low durometer seals 24, 26, 28, 30 may be shaped similar to the low durometer seals 24, 26, 28, 30 discussed above, the high elasticity of the very low durometer seals 24, 26, 28, 30 allows them to conform to any shape. Specifically, the very low durometer seals 24, 26, 28, 30 are designed to accommodate tolerances associated with each cable diameter by developing a geometry that properly displaces the seal material. Thus, a specific geometry of the seals 24, 26, 28, 30 is not necessary.

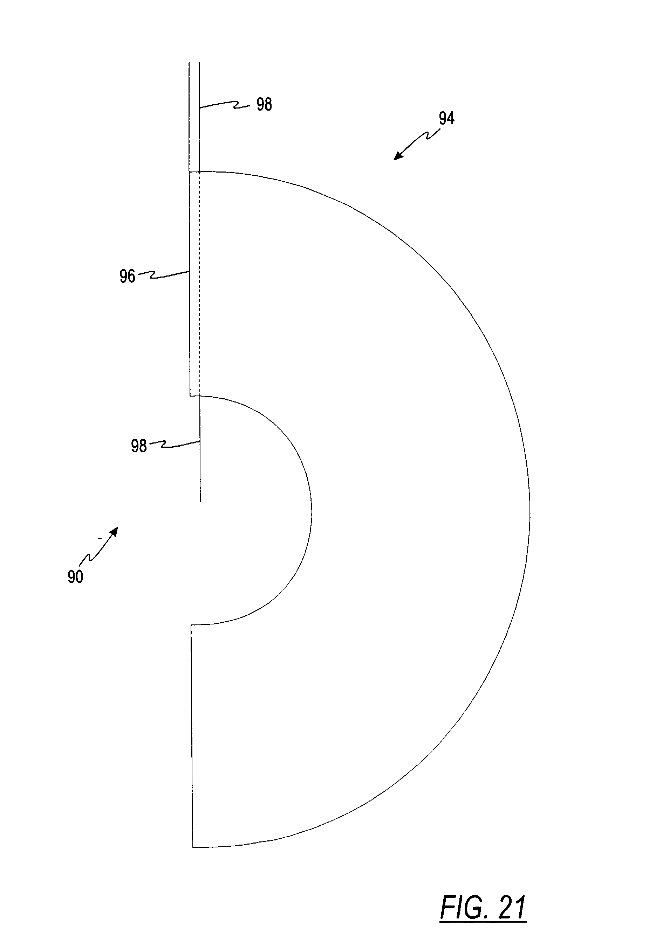

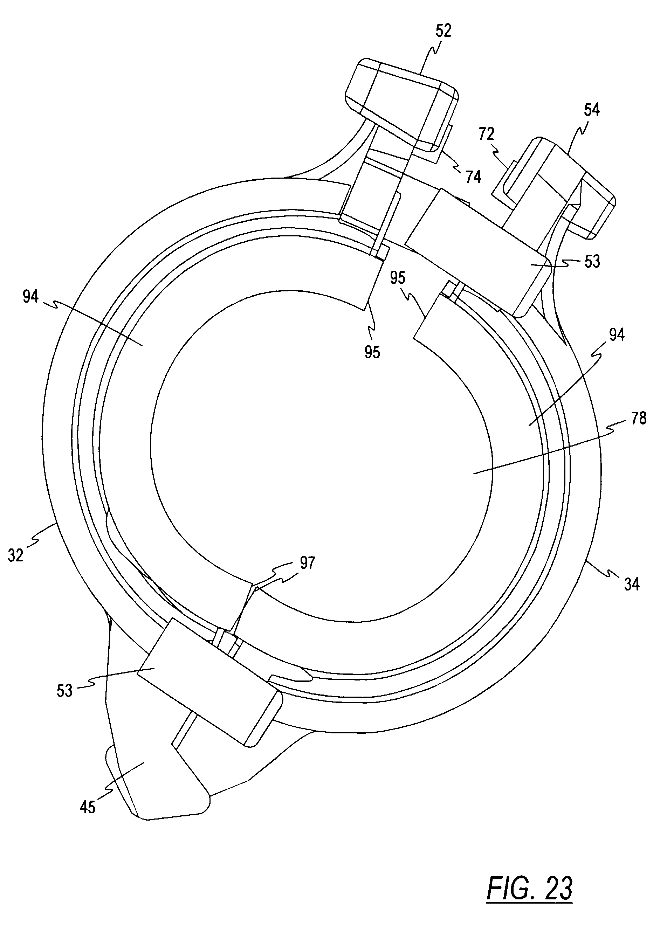

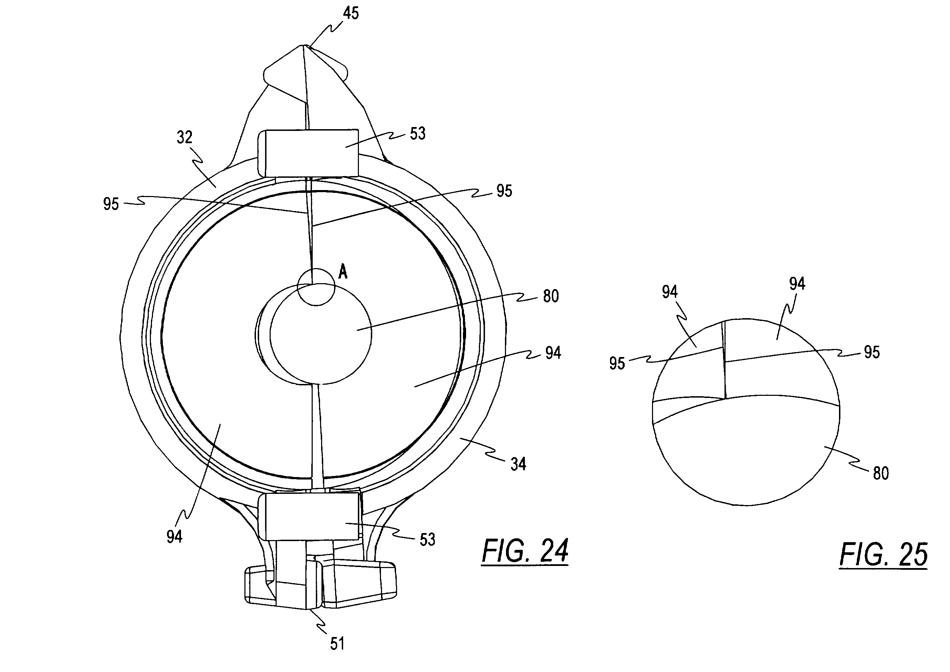

In a one embodiment, however, the end seals 24, 26 each comprise two C-shaped segments 94. Each C-shaped segment 94, in the embodiment shown in FIG. 21, is formed from a grommet having an overcenter cut, i.e., one end 96 of the C-shaped segment 94 extends slightly farther than if the grommet were cut along its diameter 98. Thus, as shown in FIGS. 23 and 24, some of the material from the end seals 24, 26 will be displaced when the housing 22 is sealed around the cables 78, 80. The displaced end seal material of very low durometer ensures that virtually all voids between the housing 22 and the cables 78, 80 are filled. A groove 88 may be incorporated around the outer surface of each C-shaped segment 94 to help align the segment 94 with the lip 92 of the housing 22. The ends 96 of the C-shaped segments 94 may be straight 95 or rounded 97.

FIG. 23 shows the segments 94 at the end of the assembly of FIG. 22, which has the larger diameter central opening. FIG. 22 is similar to FIG. 2, but shows the cables 78, 80 and connectors 82, 84 assembled in the opposite housing half 34. As exemplified in FIG. 23, providing rounded ends 97 on the C-shaped segments 94 directs the end seal material to disperse radially in both directions. As exemplified in FIGS. 24 and 25, providing straight ends 95 on the C-shaped segments 94 directs the end seal material to disperse radially in one direction, i.e., toward the open end of the housing 22. (FIG. 25 shows the area A of FIG. 24.) Both the rounded ends 97 and the straight ends 95 prevent pockets or voids from forming between the ends 95, 97 of the segments 94. No gel or grease is necessary for the weather-proofing apparatus 20 to pass immersion tests if C-shaped end seals 94 are used.

The seal material should exhibit very high elasticity and softness, and have an elongation of almost 600% to provide excellent shock absorption and vibration dampening properties. The seal material should also be water, UV, and ozone resistant, and should be able to operate in extreme temperatures for use outdoors. As a result of the sealing of the housing 22 around the connector 76, the end seals 24, 26 and perimeter seals 28, 30 are resiliently deformed, forming a moisture proof seal around the cables 78, 80 and the intersecting interfaces of the housing 22. Accordingly, the seal material should also provide good resistance to compression set.

The end seals 24, 26 and perimeter seals 28, 30 may have a tacky exterior to adhere to the housing 22 and/or the jacket of the coaxial cables 78, 80, thereby providing additional sealing security. A tacky exterior would prevent the seals 24, 26, 28, 30 from falling out during installation, and also help to keep the seals 24, 26, 28, 30 in the housing 22 after installation. The tacky exterior may be an inherent characteristic of the seal material, e.g., if the seal material is urethane, or the tacky exterior may be due to the application of an adhesive on the seals 24, 26, 28, 30.

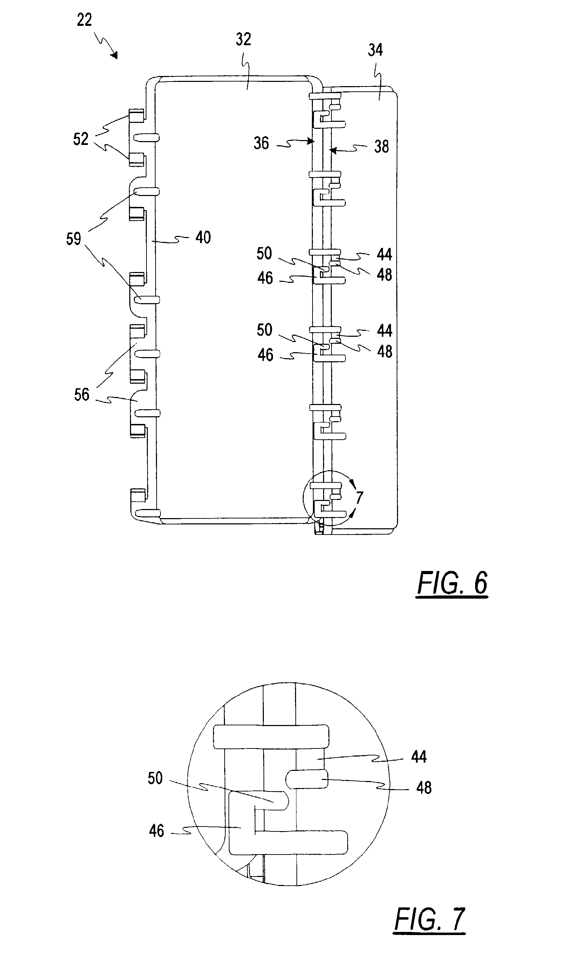

The housing 22 is assembled by abutting the first edge 36 of the first section 32 with the first edge 38 of the second section 34 as shown in FIG. 6. Initially, the lobes 48 of the first section 32 are separated from the lobes 50 of the second section 34, as shown in FIGS. 6 and 7. The two sections 32, 34 are then slid along the first edges 36, 38 so that each lobe 48 of the first section 32 snaps over a corresponding lobe 50 of the second section 34 and aligns with the respective pocket 46 of the second section 34, and vice versa each lobe 50 of the second section 34 "snaps" and aligns with the respective pocket 44 of the first section 32, as shown in FIGS. 4, 8 and 10. As the housing halves 32, 34 are rotated in a direction for bringing the snap tabs 52, 54 together, each lobe 48, 50 engages the respective pocket 46, 44, and becomes concentric with each other lobe 48, 50 (as shown in FIG. 9) forming a corresponding plurality of hinges 55 (see FIGS. 2 and 22). The plurality of hinges 55 define the integral hinge 45, which connects the first section 32 to the second section 34. These hinges impart a true pivotal motion to the housing halves when fully interconnected as just described.

The connector 76 is enclosed in the closed cell rubber casing 86 and placed into the housing 22. If in the form of a generally annular grommet, the end seals 24, 26 are stretched over and positioned onto the cables 78, 80 to align with the lips 43 on the respective apertures 31 of the housing 22. If in the form of C-shaped segments with an overcenter cut, the end seals 94 are placed along the lips of the housing. The perimeter seals 28, 30 are placed in the grooves 41 along the edges 36, 40 of the housing 22. Although the perimeter seals 28, 30 are shown along the edges 36, 40 of the first section 32 in FIG. 2, the perimeter seals 28, 30 may also be placed along the edges 38, 42 of the second section 34. To lock the second edge 40 of the first section 32 with the second edge 42 of the second section 34, the housing 22 is pivoted about the hinge 45 to engage the integral closure 51 (see FIG. 3) provided by the snap tabs 52, 54. More particularly, the sloping edge 72a of each clasp 72 from the first section 32 engages the sloping edge 74a of a respective clasp 74 from the second section 34, as shown in FIG. 13. This engagement forces the free walls 68, 70 away from their normal positions, allowing the clasps 72, 74 to pass each other. After the sloping edges 72a, 74a of the clasps 72, 74 clear each other, the free walls 68, 70 return to their normal positions, with the trailing edge 72b of each clasp 72 from the first section 32 disposed against the trailing edge 74b of the respective clasp 74 from the second section 34 to preclude or resist removal of the clasps 72, 74, as shown in FIG. 14. Thus, the snap tabs 52, 54 of the integral closure 51 are resiliently interlocked, and the housing 22 is sealed around the connector 76. To prevent any lateral movement between the second edges 40, 42 of the housing sections 32, 34, a pin (not shown) may be inserted through aligning holes (not shown) in two abutting ledges 56, 58.

The configuration of the apparatus 20 allows it to be re-enterable and re-useable by releasing the engagement between the snap tabs 52, 54. The first section 32 may also be detached from the second section 34 along the hingeable edge 36, 38 by disengaging the lobes 48, 50 from their respective pockets 46, 44. Since the housing halves 32, 34 are identical, the respective pairs of interlocking parts, including the snap tabs 52, 54 and pockets and lobes 44, 46 and 48, 50 are symmetrically located. That is, these parts are symmetrical about a central plane of symmetry which is perpendicular to the axis of the cables 78, 80.

The present invention utilizes a minimal number of parts and components, namely, the housing sections 32, 34, the end seals 24, 26, the perimeter seals 28, 30, and the foam cast 86. In addition, each corresponding housing section 32 is identical to its corresponding housing section 42, each end seal 24 is identical to its corresponding end seal 26, and each perimeter seal 28 is identical to its corresponding perimeter seal 30. This arrangement is also designed to withstand immersion in one meter of water for 24 hours. Unlike the prior art butyl tape wrap method, the present invention is relatively insensitive to variations in temperature either during installation, removal, or service.

All of the compositions and apparatus disclosed and claimed herein can be made and executed without undue experimentation in view of the present disclosure. While the compositions and apparatus of this invention have been described in terms of preferred embodiments, it will be apparent to those of skill in the art that variations may be applied to the compositions and apparatus described herein without departing from the concept, spirit, and scope of the invention. All such similar substitutes and modifications apparent to those skilled in the art are deemed to be within the spirit, scope, and concept of the invention as defined by the appended claims.

## Claims

1. An apparatus for weather-proofing a connection between cables, comprising:
a housing enclosing the connection, wherein said housing has opposite end apertures, and the cables extend through the apertures; and
an elastically deformable end seal between each aperture of said housing and one of the cables;
wherein said housing is constructed of substantially identical molded housing halves.

2. The weather-proofing apparatus of claim 1, wherein the durometer of said end seal is less than 64 measured on the Shore A scale.

3. The weather-proofing apparatus of claim 1, wherein the durometer of said end seal is less than 10 measured on the Shore A scale.

4. The weather-proofing apparatus of claim 1, wherein said end seal is tacky.

5. The weather-proofing apparatus of claim 1, wherein said end seal comprises a generally annular grommet with a circumferential groove around an outer surface of the grommet.

6. The weather-proofing apparatus of claim 1, wherein said end seal comprises two C-shaped segments.

7. The weather-proofing apparatus of claim 1, wherein said housing halves comprise a first half hingedly connected to a second half along a first edge, and wherein said first half and said second half are releasably latchable along a second edge opposite the first edge.

8. The weather-proofing apparatus of claim 1 further comprising an elastically deformable perimeter seal along one of the first and second edges of said housing.

9. The weather-proofing apparatus of claim 1, wherein the durometer of said perimeter seal is less than 10 measured on the Shore A scale.

10. The weather-proofing apparatus of claim 1, wherein said perimeter seal is tacky.

11. The weather-proofing apparatus of claim 1, wherein said housing comprises:
a first half section having an edge;
a pocket extending from the edge of said first half section;
a lobe adjacent said pocket of said first half section;
a second half section having an edge;
a pocket extending from the edge of said second half section; and
a lobe adjacent said pocket of said second half section;
wherein said lobe of said first half section engages said pocket of said second half section and said lobe of said second half section engages said pocket of said first half section to hingedly connect said first half section to said second half section;
wherein said first and second half sections are substantially identical molded parts.

12. The weather-proofing apparatus of claim 1, wherein said housing comprises:
a first half section having a first edge and a second edge;
a second half section having a first edge and a second edge, wherein the first edge of said first half section is hingedly connected to the first edge of said second half section;
a first ledge extending from said second edge of said first half section;
a second ledge extending from said second edge of said second half section;
a first snap tab projecting laterally from said first ledge; and
a second snap tab projecting laterally from said second ledge;
wherein said snap tab from said first half section is engageable with said snap tab from said second half section to connect the second edge of said first half section with the second edge of said second half section.

13. The weather-proofing apparatus of claim 1, wherein said first snap tab comprises:
a first U-shaped projection having a first wall and a second wall, wherein the first wall extends from said first ledge and the second wall is resiliently deformable; and
a first wedge-like clasp extending from the second wall of said first projection;
wherein said second snap tab comprises:
a second U-shaped projection having a third wall and a fourth wall, wherein the third wall extends from said second ledge and the fourth wall is resiliently deformable; and
a second wedge-like clasp extending from the fourth wall of said second projection.

14. A housing, for a weather-proofing apparatus comprising:
a first half section having a first edge and a second edge;
a pocket extending from the first edge of said first half section;
a lobe adjacent said pocket of said first half section;
a second half section having a first edge and a second edge;
a pocket extending from the first edge of said second half section; and
a lobe adjacent said pocket of said second half section;
wherein said lobe of said first half section engages said pocket of said second half section and said lobe of said second half section engages said pocket of said first half section to hingedly connect the first edge of said first half section to the first edge of said second half section.

15. The housing of claim 14, wherein said first half section is identical to said second half section.

16. The housing of claim 14 wherein the lobes and pockets are configured and engaged to form a true pivot.

17. The housing of claim 14, further comprising:
a first ledge extending from said second edge of said first half section;
a second ledge extending from said second edge of said second half section;
a first snap tab projecting laterally from said first ledge; and
a second snap tab projecting laterally from said second ledge;
wherein said snap tab from said first half section is engageable with said snap tab from said second half section to connect the second edge of said first half section with the second edge of said second half section.

18. The housing of claim 14, wherein said first snap tab comprises:
a first U-shaped projection having a first wall and a second wall, wherein the first wall extends from said first ledge and the second wall is resiliently deformable; and
a first wedge-like clasp extending from the second wall of said first projection;
wherein said second snap tab comprises:
a second U-shaped projection having a third wall and a fourth wall, wherein the third wall extends from said second ledge and the fourth wall is resiliently deformable; and
a second wedge-like clasp extending from the fourth wall of said second projection.

19. A housing, for a weather-proofing apparatus comprising:
a first half section having a first edge and a second edge;
a second half section having a first edge and a second edge, wherein the first edge of said first half section is hingedly connected to the first edge of said second half section;
a first ledge extending from said second edge of said first half section;
a second ledge extending from said second edge of said second half section;
a first snap tab projecting laterally from said first ledge, wherein said first snap tab comprises:
a first U-shaped projection having a first wall and a second wall, wherein the first wall extends from said first ledge and the second wall is resiliently deformable; and
a first wedge-like clasp extending from the second wall of said first projection; and
a second snap tab projecting laterally from said second ledge, wherein said second snap tab comprises:
a second U-shaped projection having a third wall and a fourth wall, wherein the third wall extends from said second ledge and the fourth wall is resiliently deformable; and
a second wedge-like clasp extending from the fourth wall of said second projection;
wherein said first snap tab is engageable with said second snap tab to connect the second edge of said first half section with the second edge of said second half section.

20. The housing of claim 19, wherein said first half section is identical to said second half section.

21. The housing of claim 19 wherein the lobes and pockets are configured and engaged to form a true pivot.

22. A method for weather-proofing a connection between two cables, comprising:
enclosing the connection within a housing which has end apertures with the cables extending through the apertures;
sealing an area between each aperture of said housing and one of the cables with an elastically deformable end seal; and
molding said housing in substantially identical housing halves.

23. The weather-proofing method of claim 22, including selecting the durometer of said seal end as less than 64 measured on the Shore A scale.

24. The weather-proofing method of claim 22, including forming said end seal of a tacky material.

25. The weather-proofing method of claim 22, including forming said end seal as a generally annular grommet with a circumferential groove around an outer surface of the grommet.

26. The weather-proofing method of claim 22, including forming said end seal as two C-shaped segments.

27. The weather-proofing apparatus of claim 19, forming each C-shaped segment with a circumferential groove around an outer convex surface of the C-shaped segmet.

28. The weather-proofing method of claim 22, including hingedly connecting a first housing half to a second housing half along a first edge, and releasably latching said first housing half to said second housing half along a second edge opposite the first edge.

29. The weather-proofing method of claim 22 further comprising attaching an elastically deformable perimeter seal along one of the first and second edges of said housing.

30. The weather-proofing method of claim 22, including selecting the durometer of said perimeter seal as less than 64 measured on the Shore A scale.

31. The weather-proofing method of claim 22, including forming said perimeter seal of a tacky material.

32. The weather-proofing method of claim 22 further comprising inserting a closed cell foam cast within said housing and about said cable.

33. The weather-proofing method of claim 22, including forming said closed cell foam cast as a styrene-butadiene rubber molded sponge.
